# EUROPÄISCHE PATENTSCHRIFT

(11) **EP 1 095 088 B1**
(45) Veröffentlichungstag und Bekanntmachung des Hinweises auf die Patenterteilung: **01.10.2003**
(21) Anmeldenummer: 99938213.8
(22) Anmeldetag: 26.06.1999
(51) Int. Cl.: C08G 59/06, C08G 59/10, C09D 163/00, C08L 71/02, C09D 171/02, C08L 63/00

(54) **SELBSTDISPERGIERBARE HÄRTBARE EPOXIDHARZE**
SELF-DISPERSING HARDENABLE EPOXY RESINS
RESINES EPOXYDES DURCISSABLES ET SPONTANEMENT DISPERSIBLES

(30) Priorität: 07.07.1998 DE 19830283
(43) Veröffentlichungstag der Anmeldung: 02.05.2001
(73) Patentinhaber: Cognis Deutschland GmbH & Co. KG, 40589 Düsseldorf (DE)
(72) Erfinder: SULZBACH, Horst, D-40593 Düsseldorf (DE); THOMAS, Hans-Josef, D-40789 Monheim (DE); HUVER, Thomas, D-40625 Düsseldorf (DE); FOGLIANISI, Vincenzo, I-20136 Milano (IT)
(86) Internationale Anmeldenummer: EP9904449
(87) Internationale Veröffentlichungsnummer: WO00002944

(56) Entgegenhaltungen:
- EP-A- 0 435 497
- EP-A- 0 709 418
- EP-A- 0 747 413
- WO-A-94/14873
- WO-A-96/20978
- US-A- 4 518 749

## Beschreibung

### Gebiet der Erfindung

Die Erfindung betrifft in wäßrigen Medien selbstdispergierbare, härtbare Epoxidharze sowie ein Verfahren zu ihrer Herstellung. Bei diesen Epoxidharzen handelt es sich um spezielle Verbindungen auf Basis α,β-ungesättigter Carbonsäureester. Die Erfindung betrifft weiterhin wäßrige Dispersionen mit einem Gehalt an diesen speziellen Epoxidharzen. Schließlich betrifft die Erfindung die Verwendung dieser speziellen Epoxidharze zur Beschichtung fester Substrate.

### Stand der Technik

Härtbare Epoxidharze werden seit vielen Jahren als Komponenten in Beschichtungszusammensetzungen eingesetzt. Lange Zeit galten jedoch die Eigenschaften von Beschichtungen, die unter Verwendung wäßriger Epoxidharzdispersionen hergestellt wurden, solchen Beschichtungen, in welchen das Harz in einem organischen Lösungsmittel gelöst verwendet wurde, als unterlegen. Dies wurde hauptsächlich darauf zurückgerührt, daß die verwendeten Emulgatoren - beispielsweise Nonylphenolethoxylate - zur Oberfläche des Filmes wandern und dort dessen Eigenschaften negativ beeinflussen. Eine Möglichkeit dieses Problem zu lösen, besteht in der Verwendung von sogenannten Reaktivemulgatoren, welche bei der Vernetzung des Epoxidharzes mittels eines Di- oder Polyamines oder eines anderen Härters mit dem Härter reagieren und so Bestandteil der Beschichtung werden. Wäßrige Dispersionen spezieller Reaktivemulgatoren sind aus dem Stand der Technik bekannt.

In **US 4 315 044** wird eine stabile Epoxidharzdispersion beschrieben. Diese enthält (1) ein wässeriges Medium und (2) zwischen 50 - 70 Gew.-% eines selbstemulgierbaren Epoxidharzes, welches das Additonsprodukt von (a) 40 - 90 Gew.-% Diglycidylether eines bifunktionellen Phenoles, (b) 5 - 35 Gew.-% eines bifunktionellen Phenoles und (c) 2 - 15 Gew.-% des Diglycidylethers eines Polyoxyalkylenglycols ist und in welchem das Molekulargewicht des Epoxidharzes zwischen 500 und 20.000 liegt.

In **US 4 608 406** wird eine stabile Epoxiddispersion beschrieben. Diese enthält (1) ein wässeriges Medium und (2) zwischen 50 - 70 Gew.-% eines selbstemulgierbaren Epoxidharzes mit einem Molekulargewicht im Bereich von 1000 bis 20000, welches das Additonsprodukt von (a) 40 - 90 Gew.-% Diglycidylether eines bifunktionellen Phenoles, (b) 5 - 35 Gew.-% eines bifunktionellen Phenoles, (c) 2 - 15 Gew.-% des Diglycidylethers eines Polyoxyalkylenglycols und (d) 2 - 15 Gew.-% eines Alkylphenol-Formaldeyd-Novolack-Harzes ist.

In **EP-B-272 595** und **DE-A-36 43 751** wird ein Verfahren zur Herstellung und Verwendung von stabilen wässerigen Epoxidharz-Dispersionen bestehend aus a) 50 bis 80 Gew. % einer Epoxidverbindung mit mindestens zwei Epoxidgruppen pro Molekül und einem Epoxidäquivalentgewicht von 100 bis 2000, b) 35 bis 17 Gew. % eines aromatischen Polyols und c) 15 bis 3 Gew. % eines Kondensationsproduktes aus einem aliphatischen Polyol mit einem Molgewicht (Mw) von 200 bis 20000 und einer Epoxidverbindung mit mindestens zwei Epoxidgruppen pro Molekül und einem Epoxidäquivalentgewicht von 100 bis 2000, wobei das Äquivalentverhältnis der OH-Gruppen zu den Epoxidgruppen 1:0,85 bis 1:3,5 beträgt und das Epoxidäquivalentgewicht dieses Kondensationsproduktes zwischen 200 und mindestens 50000 liegt.

In **WO 95/18165** (Henkel Corp.) wird ein selbstdispergierbares, härtbares Epoxidharz beschrieben, welches durch Reaktion eines Epoxidharzes (a) mit einem Polyoxyalkylenamin (b), welches ein Molekulargewicht zwischen 3.000 und 15.000 besitzt, zugänglich ist.
Die genannten Komponenten werden dabei in einem Verhältnis von (b) :(a) = 0,001:1,0 bis 0,060:1,0 Äquivalenten eingesetzt.

In **WO 96/20970** (Henkel Corp.) wird ein selbstdispergierbares, härtbares Epoxidharz beschrieben, welches durch Reaktion von (a) 1.0 Äquivalenten Epoxidharz, (b) 0,01 - 1,0 Äquivalenten eines polyfunktionellen Phenoles und (c) 0,005 - 0,5 Äquivalenten eines Amin-Epoxidadduktes zugänglich ist. Das Amin-Epoxidaddukt (c) stellt dabei ein Reaktionsprodukt von 1.0 Äquivalenten eines Polyepoxides und 0.3 - 0.9 Äquivalenten eines Polyoxyalkylendiamin dar.

In **EP-A-747 413** wird ein selbstemulgierbares Epoxidharz (A) herstellbar aus Massenanteilen von (A-1) 50 bis 95% einer oder mehrerer Epoxidverbindung(en) mit mindestens zwei Epoxidgruppen pro Molekül und einem Epoxidgruppengehalt von 300 bis 11.200 mmol/kg, (A-2) 5 bis 50% eines aromatischen Polyols, (A-3) 0 bis 25% modifizierender Verbindungen mit mindestens zwei epoxid-reaktiven Gruppen, (A-4) 5 bis 35% eines als Emulgator wirkenden Kondensationsproduktes aus (A-4-a) einem aliphatischen Polyol mit einer gewichtsmittleren molaren Masse M_{w} von 200 bis 20.000 g/mol und (A-4-b) einer Epoxidverbindung mit mindestens zwei Epoxidgruppen pro Molekül und einem Epoxidgruppengehalt von 500 bis 10.000 mmol/kg, wobei das Verhältnis der Anzahl der OH-Gruppen zur Anzahl der EP-Gruppen 1:2 bis 1:10 und der Epoxidgruppengehalt dieser Kondensationsprodukte (A-4) zwischen 100 und 6.700 mmol/kg beträgt.

### Beschreibung der Erfindung

Aufgabe der Erfindung war die Bereitstellung selbstdispergierbarer härtbarer Epoxidharze. Unter "selbstdispergierbar" wird dabei verstanden, daß diese Epoxidharze sich in wäßrigem Medium spontan und ohne den Einsatz zusätzlicher Additive wie Emulgier- oder Dispergieradditive dispergieren beziehungsweise emulgieren lassen. Mit anderen Worten: Bei den zu entwickelnden Epoxidharzen handelt es sich um solche, die die Eigenschaft haben, in Wasser selbstdispergierend und/oder -emulgierend zu sein. Der Einfachheit halber wird im Rahmen der vorliegenden Erfindung hierfür der Ausdruck "selbstdispergierend" gebraucht. Eine weitere Aufgabenstellung war es, wäßrige Dispersionen selbstdispergierbarer härtbarer Epoxidharze bereitzustellen, die sich durch hohe Lagerstabilität unter praxisüblichen Lagerungsbedingungen auszeichnen sollten. Eine weitere Aufgabenstellung war die Bereitstellung von Beschichtungs-Zusammensetzungen mit einem Gehalt an einem selbstdispergierbaren härtbaren Epoxidharz, wobei die Beschichtung, die nach dem Härtungsvorgang aus der BeschichtungsZusammensetzung resultiert, sich durch ausgezeichnete Eigenschaften auszeichnen sollte.

Überaschenderweise wurde nun gefunden, daß Epoxidharze die erhältlich sind durch Umsetzung α,β-ungesättigter Carbonsäureester mit Mono-, Di- oder Polyaminopolyalkylenoxidverbindungen nebst anschließender Umsetzung des dabei erhaltenen Zwischenproduktes mit einem aus dem Stand der Technik bekannten Epoxidharz die genannten Anforderungen in jeder Hinsicht ausgezeichnet erfüllen.

Gegenstand der vorliegenden Erfindung sind zunächst in wäßrigen Medien selbstdispergierbare härtbare Epoxidharze, die dadurch erhältlich sind, daß man
(a) ein oder mehrere α,β-ungesättigte Carbonsäureester (I)

   R²R³C=C(R⁴)COOR¹ (I)

   worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, mit
(b) ein oder mehreren Mono-, aminopolyalkylenoxid-Verbindungen umsetzt, wobei man die Verbindungen (a) und (b) in solchen Mengen einsetzt, daß das Äquivalentverhältnis der reaktiven H-Atome an den Aminostickstoffatomen von (b) zu der in Bezug auf die in der Formel (I) dargestellte zur Gruppe COOR¹ α,β-positionierte C=C-Doppelbindung in den Carbonsäureestern (a) im Bereich von 10:1 bis 1:10 liegt,
   und das hierbei erhaltene Zwischenprodukt anschließend mit
(c) ein oder mehreren Polyepoxiden umsetzt, wobei man das Äquivalentverhältnis von Oxiranringen in Polyepoxid (c) zu reaktiven Wasserstoffatomen der gemäß (b) eingesetzten Mono-, Di- oder Polyaminopolyalkylenoxid-Verbindungen auf einen Wert im Bereich von 100 : 1 und 1,5 : 1 einstellt.

Die erfindungsgemäßen Epoxidharze stellen je nach ihrem Molekulargewicht entweder flüssige oder feste Substanzen dar.

Der Ausdruck "Äquivalentverhältnis" ist dem Fachmann geläufig. Der grundlegende Gedanke hinter dem Begriff des Äquivalents ist der, daß man für jede an einer Reaktion beteiligten Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Dabei ist darauf zu achten, daß unter einer reaktiven Gruppe die kleinstmögliche reaktionsfähige Gruppe zu verstehen ist - der Begriff der reaktiven Gruppe ist also nicht deckungsgleich mit dem Begriff der funktionellen Gruppe. Bei H-aciden Verbindungen bedeutet das etwa, daß zwar OH-Gruppen oder NH-Gruppen solche reaktiven Gruppen darstellen, nicht aber NH₂-Gruppen, bei denen zwei reaktive H-Atome am selben Stickstoffatom sitzen. Hier werden sinnvollerweise innerhalb der funktionellen Gruppe NH₂ die beiden Wasserstoffatome als reaktive Gruppe betrachtet, so daß die funktionelle Gruppe NH₂ zwei reaktive Gruppen, nämlich die Wasserstoffatome, aufweist.
Beispiel: Setzt man eine Verbindung (a), die pro Molekül eine zu einer Carboxylgruppe α,β-ständige olefinische Doppelbindung enthält, mit einer Verbindung (b), die pro Molekül eine NH₂-Gruppe enthält, im Sinne einer Michael-Addition um, so gilt, daß Verbindung (a) pro Molekül eine reaktive Gruppe C=C enthält, Verbindung (b) dagegen zwei reaktive - am Stickstoff gebundene - Wasserstoffatome. Wollte man nun im Äquivalentverhältnis (a) : (b) = 1 : 1 umsetzen, so müßte man ein mol (a) mit einem halben mol (b) umsetzen, denn (b) enthält ja pro Molekül zwei reaktive Gruppen. Bei einem Äquivalentverhältnis (a) : (b) = 1 : 2 müßte man dagegen 1 mol (a) mit 1 mol (b) umsetzen. Natürlich könnte man auch ein Äquivalentverhältnis von beispielsweise (a) : (b) = 1 : 10 einstellen; man müßte dann 1 mol (a) mit 5 mol (b) umsetzen. Die würde bedeuten, daß man Komponente (b) im Überschuß einsetzen würde; denn von Komponente (b) könnten theoretisch ja höchstens 1 mol mit (a) im Sinne einer Michael-Reaktion reagieren.

Im Hinblick auf die Verbindungen der Klassen (a) bis (c) sei ausdrücklich festgestellt, daß es sich hierbei um unterschiedliche Substanzen handelt.

In einer Ausführungsform setzt man die Verbindungen (a) und (b) in solchen Mengen ein, daß das Äquivalentverhältnis der reaktiven H-Atome an den Aminostickstoffatomen von (b) zu der in Bezug auf die in der Formel (I) dargestellte zur Gruppe COOR¹ α,β-positionierte C=C-Doppelbindung in den Carbonsäureestern (a) im Bereich von 4 : 1 bis 1 : 4 und insbesondere von 2,5 : 1 bis 1,5 : 1 liegt.

In einer Ausführungsform stellt man das Äquivalentverhältnis von Oxiranringen in Polyepoxid (c) zu reaktiven Wasserstoffatomen der gemäß (b) eingesetzten Mono-, Di. oder Polyaminopolyalkylenoxid-Verbindungen auf einen Wert im Bereich von 100 : 1 und 1,5 : 1 ein.

Beispiele für die erfindungsgemäß einzusetzenden α,β-**ungesättigten Carbonsäureester (a)** der oben genannten Struktur (I) sind Acrylsäuremethylester, Acrylsäureethylester, Maleinsäuredimethylester, Maleinsäurediethylester, Fumarsäure-dimethylester, Fumarsäurediethylester, Itaconsäuredimethylester, Itaconsäurediethylester. Besonders bevorzugt sind dabei als Verbindungen (a) Maleinsäuredialkylester, insbesondere Maleinsäurediethylester und Maleinsäuredimethylester.

Als **Aminokomponenten** (b) dienen Mono-, aminopolyalkylenoxid-Verbindungen. Darunter ist zu verstehen, daß diese Verbindungen einerseits ein, Amino-Funktionen (NH- bzw. NH₂-Funktionen), andererseits Alkylenoxid-Bausteine enthalten. Bei den letztgenannten Bausteinen handelt es sich insbesondere um Ethylenoxid, Propylenoxid und Butylenoxid, wobei Ethylenoxid und Propylenoxid besonders bevorzugt sind. Die Verbindungen (b) sind zumindest teilweise bei 20 °C in Wasser lösliche Substanzen.

Die Herstellung der Verbindungen (b) ist aus dem Stand der Technik bekannt und schließt die Umsetzung von Hydroxylgruppen-enthaltenden Verbindungen mit Alkylenoxiden ein, nebst anschließender Umwandlung der resultierenden terminalen Hydroxylgruppen in Aminogruppen.

Bezüglich der Umsetzung von Hydroxylgruppen-enthaltenden Verbindungen mit Alkylenoxiden sind die Ethoxylierung und die Propoxylierung von besonderer Bedeutung. Hierbei geht man üblicherweise wie folgt vor: In einem ersten Schritt bringt man die gewünschte Hydroxylgruppen-enthaltenden Verbindungen mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) erhalten. Bei den Additionsprodukten handelt es sich vorzugsweise um EO-Addukte oder um PO-Addukte oder um EO/PO-Addukte an die jeweilige Hydroxylgruppen-enthaltenden Verbindung; bei den EO/PO-Addukten kann dabei die Anlagerung von EO und PO statistisch oder blockweise erfolgen.

In einer Ausführungsform setzt man als Verbindungen (b) Substanzen der allgemeinen Struktur R⁸-O-R⁹-CH₂CH(R¹⁰)-NH₂ ein. Darin bedeuten:
- R⁸ eine einwertige organische Gruppe mit 1-12 C-Atomen, die aliphatisch, cycloaliphatisch oder aromatisch sein kann
- R⁹ eine Polyoxyalkylengruppe, die aus 5-200 Polyoxyalkyleneinheiten, insbesondere EO- und/oder PO-Einheiten, aufgebaut ist
- R¹⁰ Wasserstoff oder ein aliphatischer Rest mit bis zu 4 C-Atomen.

Besonders geeignete Vertreter der Verbindungen (b) sind im Rahmen der vorliegenden Erfindung die dem Fachmann bekannten "Jeffamine" , bei denen es sich um handelsübliche Substanzen handelt. Beispielhaft sei hier "Jeffamin 2070" genannt, das nach Angaben der Firma Texaco durch Umsetzung von Methanol mit Ethylenoxid und Propylenoxid nebst Umwandlung der terminalen Hydroxylgruppen des zunächst erhaltenen Zwischenproduktes in Amingruppen hergestellt wird (vergleiche **WO 96/20971,** Seite 10, Zeilen 12-15).

Die Verbindungen (b) haben vorzugsweise mittlere Molekulargewichte (Zahlenmittel; Mn) im Bereich von 148 bis 5000, insbesondere zwischen 400 und 2000.

Bei den **Epoxidverbindungen (c)** handelt es sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyl- oder Arylsubstituenten, Ethergruppierungen und ähnliche. Vorzugsweise handelt es sich bei diesen Epoxidverbindungen um Polyglycidylether auf der Basis von mehrwertigen, vorzugsweise zweiwertigen Alkoholen, Phenolen Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 160 und 500, insbesondere zwischen 170 und 250. Das Epoxidäquivalentgewicht einer Substanz ist dabei als diejenige Menge der Substanz (in Gramm) definiert, welche 1 mol Oxiranringe enthält.
Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt.

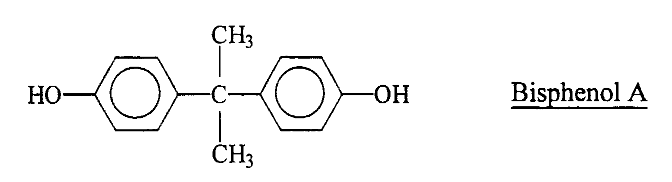

Auch die Polyglycidylether von mehrwertigen Alkoholen sind als Verbindungen (c) geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin und Bis-(4-hydroxycyclohexyl)-2,2-propan genannt.

Es können auch Polyglycidylether von Polycarbonsäuren als Verbindungen (c) verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Eine ausführliche Aufzählung geeigneter Epoxidverbindungen (c) findet sich in:
- **A.M. Paquin, Handbuch "Epoxidverbindungen und Epoxidharze",** Springer-Verlag, Berlin 1958, Kapitel V, Seiten 308 bis 461; ferner in:
- **Lee, Neville "Handbook of Epoxy Resins"**, 1967, Kapitel 2, Seiten 2-1 bis 2-33.

Es können auch Mischungen von mehreren Epoxidverbindungen (c) verwendet werden.

Ein weiterer Gegenstand der Erfindung ist ein Verfahren zur Herstellung von in wäßrigen Medien selbstdispergierbaren, härtbaren Epoxidharzen, wobei man
(a) ein oder mehrere α,β-ungesättigte Carbonsäureester (I)

   R²R³C=C(R⁴)COOR¹ (I)

   worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, mit
(b) ein oder mehreren Mono-, aminopolyalkylenoxid-Verbindungen umsetzt, wobei man die Verbindungen (a) und (b) in solchen Mengen einsetzt, daß das Äquivalentverhältnis der reaktiven H-Atome an den Aminostickstoffatomen von (b) zu der in Bezug auf die in der Formel (I) dargestellte zur Gruppe COOR¹ α,β-positionierte C=C-Doppelbindung in den Carbonsäureestern (a) im Bereich von 10:1 bis 1:10 liegt,
   und das hierbei erhaltene Zwischenprodukt anschließend mit
(c) ein oder mehreren Polyepoxiden umsetzt, wobei man das Äquivalentverhältnis von Oxiranringen in Polyepoxid (c) zu reaktiven Wasserstoffatomen der gemäß (b) eingesetzten Monoaminopolyalkylenoxid-Verbindungen auf einen Wert im Bereich von 100 : 1 und 1,5 : 1 einstellt..

Ein weiterer Gegenstand der Erfindung sind wäßrige Dispersionen mit einem Gehalt an den erfindungsgemäßen selbstdispergierbaren härtbaren Epoxidharzen. Vorzugsweise liegt der Gehalt an den erfindungsgemäßen Epoxidharzen in diesen Dispersionen im Bereich von 40 bis 70 Gew-.% - bezogen auf die gesamte Dispersion.

Wäßrige Dispersionen mit einem Gehalt der nach dem erfindungsgemäßen Verfahren zugänglichen Epoxidharze zeichnen sich in vielen Fällen durch sehr geringe mittlere Teilchengrößen aus, die im Bereich von etwa 500 nm oder weniger liegen. Dies führt zu sehr guten Materialeigenschaften der mit diesen Dispersionen hergestellten Beschichtungen. Besonders gute Materialeigenschaften werden erhalten, wenn die mittlere Teilchengröße unterhalb von etwa 300 nm liegt. Die mittlere Teilchengröße ist dabei zu verstehen als Durchschnittswert der Teilchengrößen, der durch Summieren der Werte von n Einzelmessungen und anschließende Division durch n erhalten wird. Die mittleren Teilchengrößen wurden im Rahmen der vorliegenden Erfindung mittels eines "Coulter N4 Plus Submicron Partide Sizer" der Firma Coulter, Miami FL, 33196, USA bestimmt. Dabei wird die Streuung von Laserlicht an einer stark verdünnten Dispersion zur Teilchengrößen-Bestimmung genutzt. Das Gerät führt eine Vielzahl von Einzelmessungen aus und liefert als Ergebnis die mittlere Teilchengröße. Die oben genannten Werte beziehen sich auf Messungen der Streuung unter einem Winkel von 90° relativ zum einfallenden Laserstrahl.

Die erfindungsgemäßen selbstdispergierbaren härtbaren Epoxidharze eignen sich in Kombination mit geeigneten Härtungsmitteln, insbesondere den dem Fachmann einschlägig bekannten aminischen Härtungsmitteln, und gegebenenfalls weiteren üblichen Zusatzstoffen zur Herstellung von Überzügen, Zwischenbeschichtungen, Anstrichmaterialien, Formmassen und härtbaren Massen für die unterschiedlichsten Anwendungsgebiete. Beispielsweise können sie zur Herstellung von Schutz- und/oder Dekorbeschichtungen auf den unterschiedlichsten, insbesondere rauhen und porösen Substraten, wie z.B. Holz, mineralischen Untergründen (z.B. Beton und Stein), Glas, Kunststoffen (z.B. Polyethylen, Polypropylen), Kompostwerkstoffen, Keramik und vorbehandelten oder nicht vorbehandelten Metallen verwendet werden. Durch ihre guten Eigenschaften sind die erfindungsgemäßen Epoxidharze auch hervorragend für die Einschichtlackierung geeignet. Die haftende Überzugsschicht kann als solche unverändert bleiben, sie kann aber auch als Zwischenschicht, also als Unterlage für weitere Beschichtungen, dienen, die wiederum aus demselben oder einem anderen üblichen Beschichtungsmaterial bestehen können.

Ein weiterer Gegenstand der Erfindung ist dementsprechend die Verwendung der erfindungsgemäßen selbstdispergierbaren Epoxidharze für die genannten Einsatzzwecke.

Wäßrige Dispersionen mit einem Gehalt an den erfindungsgemäßen Epoxidharzen zeichnen sich durch gute Verdünnbarkeit sowie durch günstige anwendungstechnische Eigenschaften aus. Sie eignen sich neben den bereits angesprochenen Einsatzzwecken zur Verwendung in der Elektrotauchlackierung. Darüber hinaus eignen sich wäßrige Dispersionen mit einem Gehalt an den erfindungsgemäßen Epoxidharzen zur Herstellung wasserverdünnbarer Klebstoffe, als Bindemittel für Textilien, organische und/oder anorganische Materialien, sowie als Additive für Kunststoffzemente.

### BEISPIELE

Zur Bestimmung der mittleren Teilchengröße in Beispiel 2 wurde ein "Coulter N4 Plus Submicron Partide Sizer" der Firma Coulter, Miami FL, 33196, USA eingesetzt. Die gemessenen Werte beziehen sich auf Messungen der Streuung unter einem Winkel von 90° relativ zum einfallenden Laserstrahl.

### Beispiel 1

Zu 200.0 g Monoaminopolyethylenoxid ("Jeffamine M 2070" der Firma Huntsman) wurden unter Rühren bei 80 °C 17.5 g Diethylmaleat zugetropft und anschließend 1 Stunde bei 80 °C gerührt. Nun wurden bei 100 °C zu 380.0 g (0.3 mol) Chemres E50 (Bisphenol-A basiertes Epoxidharz der Firma Henkel SpA mit einem mittleren Epoxidäquivalentgewicht von ungefähr 475 g) zugetropft und 1 Stunde bei 100 °C gerührt. Anschließend wurde das Lösungsmittel im Vakuum entfernt und 570.0 g (1.5 mol) Chemres E20 (Bisphenol-A basiertes Epoxidharz der Firma Henkel SpA mit einem mittleren Epoxidäquivalentgewicht von ungefähr 190 g) und - zur Verdünnung - 100 ml Ethoxypropanol zugegeben.

### Beispiel 2

Zu 200 g des gemäß Beispiel 1 erhaltenen Produktes - und zwar der verdünnten Form - wurden bei 65 °C unter starkem Rühren 70 g Wasser zugetropft. Nach dem Abkühlen auf 40 °C wurden weitere 130 ml Wasser zugegeben. Die so erhaltene Dispersion hatte eine mittlere Teilchengröße von 225 nm.

## Patentansprüche

1. In wäßrigen Medien selbstdispergierbare, härtbare Epoxidharze, die dadurch erhältlich sind, daß man
(a) ein oder mehrere α,β-ungesättigte Carbonsäureester (I)
R²R³C=C(R⁴)COOR¹ (I)
worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, mit
(b) ein oder mehreren Monoaminopolyalkylenoxid-Verbindungen umsetzt, wobei man die Verbindungen (a) und (b) in solchen Mengen einsetzt, daß das Äquivalentverhältnis der reaktiven H-Atome an den Aminostickstoffatomen von (b) zu der in Bezug auf die in der Formel (I) dargestellte zur Gruppe COOR¹ α,β-positionierte C=C-Doppelbindung in den Carbonsäureestern (a) im Bereich von 10:1 bis 1:10 liegt,
und das hierbei erhaltene Zwischenprodukt anschließend mit
(c) ein oder mehreren Polyepoxiden umsetzt, wobei man das Äquivalentverhältnis von Oxiranringen in Polyepoxid (c) zu reaktiven Wasserstoffatomen der gemäß (b) eingesetzten Mono-, aminopolyalkylenoxid-Verbindungen auf einen Wert im Bereich von 100 : 1 und 1,5 : 1 einstellt.

2. Epoxidharze nach Anspruch 1, wobei man als Komponente (a) ein oder mehrere Maleinsäuredialkylester einsetzt.

3. Epoxidharze nach Anspruch 1 oder 2, wobei man als Komponente (b) Monoaminopolyethylenoxid einsetzt.

4. Wäßrige Dispersionen mit einem Gehalt an einem oder mehreren der Epoxidharze gemäß den Ansprüchen 1 bis 3.

5. Wäßrige Dispersionen gemäß Anspruch 4, wobei die mittler Teilchengröße der dispergierten Teilchen etwa 500 nm oder weniger beträgt.

6. Verfahren zur Herstellung von in wäßrigen Medien selbstdispergierbaren, härtbaren Epoxidharzen, **dadurch gekennzeichnet, daß** man
(a) ein oder mehrere α,β-ungesättigte Carbonsäureester (I)
R²R³C=C(R⁴)COOR¹ (I)
worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, mit
(b) ein oder mehreren Monoaminopolyalkylenoxid-Verbindungen umsetzt, wobei man die Verbindungen (a) und (b) in solchen Mengen einsetzt, daß das Äquivalentverhältnis der reaktiven H-Atome an den Aminostickstoffatomen von (b) zu der in Bezug auf die in der Formel (I) dargestellte zur Gruppe COOR¹ α,β-positionierte C=C-Doppelbindung in den Carbonsäureestern (a) im Bereich von 10:1 bis 1:10 liegt,
und das hierbei erhaltene Zwischenprodukt anschließend mit
(c) ein oder mehreren Polyepoxiden umsetzt, wobei man das Äquivalentverhältnis von Oxiranringen in Polyepoxid (c) zu reaktiven Wasserstoffatomen der gemäß (b) eingesetzten Mono-, aminopolyalkylenoxid-Verbindungen auf einen Wert im Bereich von 100 : 1 und 1,5 : 1 einstellt.

7. Verwendung der Epoxidharze gemäß einem der Ansprüche 1 bis 3 zur Herstellungen von Beschichtungen.

## Claims

1. Self-dispersible epoxy resins curable in aqueous media and obtainable by
(a) reacting one or more α,β-unsaturated carboxylic acid esters (I)
R²R³C=C(R⁴)COOR¹ (I)
where R¹ is an aromatic or aliphatic radical containing up to 15 carbon atoms, the substituents R², R³ and R⁴ independently of one another represent hydrogen, branched or unbranched, aliphatic or aromatic groups containing up to 20 carbon atoms or a group -(CH₂)ₙ-COOR¹, where R¹ is as defined above and n is a number of 0 to 10, with
(b) one or more monoaminopolyalkylene oxide compounds, compounds (a) and (b) being used in such quantities that the equivalent ratio of the reactive hydrogen atoms at the aminonitrogen atoms of (b) to the C=C double bond in the α,β-position to the group COOR¹ shown in formula (I) in the carboxylic acid esters (a) is in the range from 10:1 to 1:10,
and subsequently reacting the intermediate product obtained with
(c) one or more polyepoxides, the equivalent ratio of oxirane rings in polyepoxide (c) to reactive hydrogen atoms of the mono-, di- or polyaminopolyalkylene oxide compounds used in (b) being adjusted to a value of 100:1 to 1.5:1.

2. Epoxy resins as claimed in claim 1, **characterized in that** one or more dialkyl maleates is/are used as component (a).

3. Epoxy resins as claimed in claim 1 or 2, **characterized in that** monoaminopolyethylene oxide is used as component (b).

4. Aqueous dispersions containing one or more of the epoxy resins claimed in claims 1 to 3.

5. Aqueous dispersions as claimed in claim 4, **characterized in that** the mean particle size of the dispersed particles is about 500 nm or less.

6. A process for the production of self-dispersible curable epoxy resins, **characterized in that** it comprises the steps of
(a) reacting one or more α,β-unsaturated carboxylic acid esters (I)
R²R³C=C(R⁴)COOR¹ (I)
where R¹ is an aromatic or aliphatic radical containing up to 15 carbon atoms, the substituents R², R³ and R⁴ independently of one another represent hydrogen, branched or unbranched, aliphatic or aromatic groups containing up to 20 carbon atoms or a group -(CH₂)ₙ-COOR¹, where R¹ is as defined above and n is a number of 0 to 10, with
(b) one or more monoaminopolyalkylene oxide compounds, compounds (a) and (b) being used in such quantities that the equivalent ratio of the reactive hydrogen atoms at the aminonitrogen atoms of (b) to the C=C double bond in the α,β-position to the group COOR¹ shown in formula (I) in the carboxylic acid esters (a) is in the range from 10:1 to 1:10,
and subsequently reacting the intermediate product obtained with
(c) one or more polyepoxides, the equivalent ratio of oxirane rings in polyepoxide (c) to reactive hydrogen atoms of the mono-, di- or polyaminopolyalkylene oxide compounds used in (b) being adjusted to a value of 100:1 to 1.5:1.

7. The use of the epoxy resins claimed in any of claims 1 to 3 for the production of coatings.

## Revendications

1. Résines époxydes durcissables, autodispersibles dans des milieux aqueux qui sont accessibles en ce qu'
on fait réagir
a) un ou plusieurs esters d'acide carboxylique α, β non saturés (I)
**R**^{**2**}**R**^{**3**}**C=C(R**^{**4**}**)COOR**^{**1**} **(I)**
dans laquelle le reste R¹ signifie un reste aromatique ou aliphatique ayant jusqu'à 15 atomes de carbone, les restes R², R³ et R⁴ indépendamment les uns des autres signifient de l'hydrogène, des groupes ramifiés ou non ramifiés, aliphatiques ou aromatiques ayant à chaque fois jusqu'à 20 atomes de carbone, ou un groupe -(CH₂)ₙCOOR¹ dans lequel R¹ a la signification fournie ci-dessus, et
n est un nombre dans la zone de 0 à 10
avec
b) un ou plusieurs composés monoaminopolyalkylèneoxyde
dans lequel on met en oeuvre les composés (a) et (b) en quantités telles que le rapport en équivalent des atomes d'H réactifs pour les atomes d'azote aminé de (b) pour la double liaison C=C positionnée en α, β représentée dans la formule (I), dans les esters d'acide carboxyliques (a), se situe dans la zone de 10 : 1 à 1 :10,
et le produit intermédiaire obtenu de cette façon est mis à réagir ensuite avec
c) un ou plusieurs polyépoxydes, pour lesquels on ajuste le rapport en équivalent des cycles oxyrane dans le polyépoxyde (c) par rapport aux atomes d'hydrogène réactif des composés di-ou polyaminopolyalkylène oxyde mis en oeuvre conformément à (b) à une valeur dans la zone de 100 :1 à 1,5 :1.

2. Résines epoxydes selon la revendication 1,
dans lesquelles
on met en oeuvre comme composant (a) un ou plusieurs esters dialkyliques d'acide maléique.

3. Résines époxydes selon la revendication 1 ou la revendication 2,
dans lesquelles
on met en oeuvre comme composant (b) un oxyde de monoaminopolyéthylène.

4. Dispersions aqueuses ayant une teneur en une ou plusieurs des résines époxydes conformément aux revendications 1 à 3.

5. Dispersions aqueuses conformément à la revendication 4,
dans lesquelles
la taille de particules moyenne des particules dispersées s'élève à environ 500 nm ou moins.

6. Procédé de préparation de résines époxydes durcissables, autodispersibles en milieu aqueux,
**caractérisé en ce qu'**
c) on fait réagir un ou plusieurs esters d'acide carboxylique α, β non saturés (I)
**R**^{**2**}**R**^{**3**}**C=C(R**^{**4**}**)COOR**^{**1**} **(I)**
dans laquelle le reste R¹ signifie un reste aromatique ou aliphatique ayant jusqu'à 15 atomes de carbone, les restes R², R³ et R⁴ indépendamment les uns des autres, signifient de l'hydrogène, des groupes ramifiés ou non ramifiés, aliphatiques ou aromatiques, ayant respectivement jusqu'à 20 atomes de carbone, ou un groupe -(CH₂)ₙ-COOR¹ dans lequel R¹ a la signification fournie ci-dessus et n est un nombre dans la zone de 0 et 10,
avec
b) un ou plusieurs composés monoaminopolyalkylène oxyde
dans lequel on met en oeuvre les composés (a) et (b) en des quantités telles que le rapport en équivalent des atomes de H réactifs sur les atomes d'azote aminé de (b) pour la double liaison C=C positionnée en α, β, en référence au groupe COOR¹ représenté dans la formule (I) dans les esters d'acide carboxyliques (a) se situe dans la zone de 10 :1 à 1 :10 et on fait réagir le produit intermédiaire obtenu de cette façon ensuite avec
c) un ou plusieurs polyépoxydes pour lesquels on ajuste le rapport en équivalents des cycles oxirane dans le polyépoxyde (c) pour les atomes d'hydrogène réactifs des composés mono-di-ou polyaminopolyalkylène, oxyde mis en oeuvre conformément à (b), à une valeur dans la zone de 100 :1 et 1,5 : 1.

7. Utilisation des résines époxydes conformément à l'une des revendications 1 à 3,
en vue de la préparation de revêtements.
